# DEMANDE DE BREVET EUROPEEN

(11) **EP 3 715 258 A1**
(43) Date de publication de la demande: **30.09.2020**
(21) Numéro de dépôt: 20161078.9
(22) Date de dépôt: 05.03.2020
(51) Int. Cl.: B64D 27/26

(54) **ATTACHE MOTEUR ARRIÈRE D'UN AÉRONEF PRÉSENTANT DES BIELLETTES EN DEUX PARTIES ET AÉRONEF COMPRENANT AU MOINS UNE TELLE ATTACHE MOTEUR ARRIÈRE**

(30) Priorité: 25.03.2019 FR 1903067
(71) Demandeur: Airbus Operations SAS, 31060 Toulouse (FR)
(72) Inventeur: BERJOT, Michael, 31770 COLOMIERS (FR); GELIOT, Jean, 31400 TOULOUSE (FR)
(74) Mandataire: Fantin, Laurent

(57) **Abrégé**

L'invention a pour objet une attache moteur arrière d'aéronef reliant une structure primaire (56) d'un mât et un moteur (58) d'un aéronef. L'attache moteur arrière comprend des première et deuxième biellettes (70, 76), chacune d'elles comportant au moins deux parties (86.1, 86.2), une première partie (86.1) comportant au moins un orifice support (70.1, 70.2, 76.1), logeant un axe de liaison support (72.1, 72.2, 72.3) configuré pour relier la biellette (70, 76) directement ou indirectement à la structure primaire (56), au moins une deuxième partie (86.2) comportant au moins un orifice moteur (74.1, 74.2), logeant un axe de liaison moteur (74.1, 74.2, 78) configuré pour relier la biellette (70, 76) directement ou indirectement au moteur (58), ainsi que des éléments de liaison démontables (88) pour relier les première et deuxième parties (86.1, 86.2) orientés parallèlement à la direction de la biellette.

## Description

La présente demande se rapporte à une attache moteur arrière d'un aéronef présentant des biellettes en deux parties ainsi qu'à un aéronef comprenant au moins une telle attache moteur arrière.

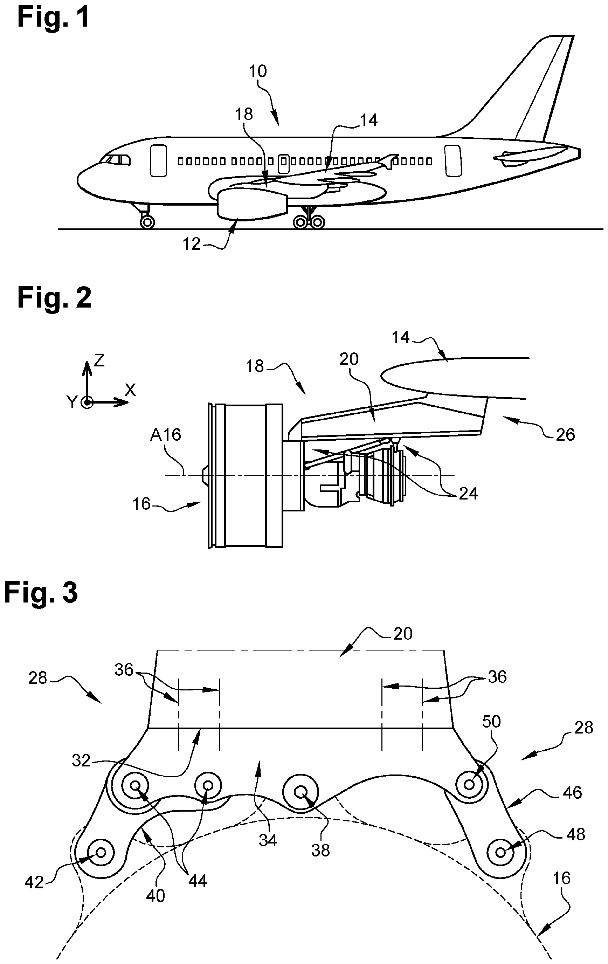

Selon un mode de réalisation visible sur les figures 1 et 2, un aéronef 10 comprend plusieurs ensembles propulseurs 12 positionnés sous chacune des ailes 14 de l'aéronef. Chaque ensemble propulseur 12 comprend un moteur 16, une nacelle (non représentée sur la figure 2) positionnée autour du moteur 16 et un mât 18 reliant le moteur 16 et l'aile 14. Le mât 18 comprend une structure primaire 20 qui est reliée au moteur 16 par une attache moteur 22 et à l'aile 14 par une attache voilure 24.

Pour la présente invention, une direction longitudinale est sensiblement parallèle à l'axe de rotation A16 du moteur. Un plan longitudinal vertical est un plan vertical passant par l'axe de rotation A16 du moteur. Un plan transversal est un plan perpendiculaire à l'axe de rotation A16 du moteur. Une direction transversale horizontale est une direction horizontale et perpendiculaire à l'axe de rotation A16 du moteur.

L'attache moteur 22 comprend une attache moteur avant 26, une attache moteur arrière 28 et un couple de bielles de poussée 30 assurant la reprise des efforts de poussée.

Selon un mode de réalisation visible sur la figure 3, pour l'attache moteur arrière 28, la structure primaire 20 comprend une semelle 32 positionnée approximativement dans un plan horizontal. L'attache moteur arrière 28 comprend une poutre transversale 34, reliée à la structure primaire 20 par des éléments de liaison verticaux 36 et au moteur 16 par un axe de sécurité 38, une première biellette 40 reliée au moteur 16 par un premier axe de liaison moteur latéral 42 et à la poutre transversale 34 par deux axes de liaison poutre 44 ainsi qu'une deuxième biellette 46 reliée au moteur par un deuxième axe de liaison moteur latéral 48 et à la poutre transversale 34 par un axe de liaison poutre 50. Les axes de liaison 42, 44, 48, 50 sont sensiblement parallèles entre eux et à la direction longitudinale. Selon une configuration, la semelle 32 présente des pions de cisaillement, en saillie par rapport à la semelle 32, configurés pour se loger dans des logements prévus au niveau de l'attache moteur arrière 28.

Selon un premier mode opératoire, un procédé de montage du moteur 16 comprend une première étape de fixation de l'attache moteur arrière 28 sur le moteur 16, une deuxième étape d'accostage visant à soulever l'ensemble constitué du moteur 16 et de l'attache moteur arrière 28 jusqu'à ce que l'attache moteur arrière 28 vienne en contact contre la semelle 32 de la structure primaire 20, les pions de cisaillement prévus au niveau de la structure primaire 20 étant positionnés dans leurs logements, ainsi qu'une troisième étape de mise en place et de serrage des éléments de liaison verticaux 36 pour relier l'attache moteur arrière 28 et la structure primaire 20.

Cette solution n'est pas satisfaisante car elle conduit à un encombrement important selon une direction transversale horizontale, impactant l'aérodynamisme du mât 18.

Selon un deuxième mode opératoire, un procédé de montage du moteur 16 comprend une première étape de fixation de l'attache moteur 28 sur la structure primaire 20, une deuxième étape d'accostage visant à soulever le moteur 16 ainsi qu'une troisième étape de mise en place de l'axe de liaison moteur central 38 et des premier et deuxième axes de liaison moteur latéraux 42, 48. Selon ce deuxième mode opératoire, les axes de liaison moteur 38, 42, 48 sont retirés en premier lors du démontage.

Cette solution n'est pas satisfaisante car l'opération de démontage peut s'avérer difficile en raison de phénomènes de grippage des axes de liaison moteur 38, 42, 48.

Le document EP249553 décrit une attache moteur arrière qui comprend trois biellettes de suspension reliant le moteur et le mât. Chaque biellette comprend une première partie reliée au mât par un premier axe de liaison, une deuxième partie reliée au moteur par un deuxième axe de liaison ainsi qu'un joint de cardan reliant les première et deuxième parties afin que la biellette puisse compenser les éventuelles dilatations selon la direction longitudinale subies par le moteur lors de son fonctionnement. A cet effet, la première partie de chaque biellette comprend deux branches entre lesquelles est positionnée la deuxième partie de la biellette et les deux parties de chaque biellette sont reliées par un élément de liaison qui présente un axe perpendiculaire à la direction de la biellette, cette dernière étant parallèle à une droite reliant les premier et deuxième axes de liaison. Cette orientation des éléments de liaison est nécessaire pour compenser les éventuelles dilatations selon la direction longitudinale subies par le moteur. Selon cette configuration, les éléments de liaison reliant les première et deuxième parties des biellettes travaillent en cisaillement.

La présente invention vise à remédier à tout ou partie des inconvénients de l'art antérieur. A cet effet, l'invention a pour objet une attache moteur arrière d'aéronef reliant une structure primaire d'un mât et un moteur d'aéronef,
- ladite attache moteur arrière comprenant :
   ∘ des première et deuxième biellettes, chacune des première et deuxième biellettes présentant au moins un orifice support et au moins un orifice moteur,
   ∘ pour chaque orifice support, un axe de liaison support qui est logé dans l'orifice support et configuré pour relier la biellette directement ou indirectement à la structure primaire,
   ∘ pour chaque orifice moteur, un axe de liaison moteur qui est logé dans l'orifice moteur et configuré pour relier la biellette directement ou indirectement au moteur,
- les axes de liaison support et moteur étant parallèles entre eux,
- chacune des première et deuxième biellettes présentant une direction biellette parallèle à une droite passant par l'axe de liaison support et par l'axe de liaison moteur,
- chacune des première et deuxième biellettes comprenant au moins deux parties, une première partie comportant le (ou les) orifice(s) support(s), une deuxième partie comportant le (ou les) orifice(s) moteur(s) ainsi que des éléments de liaison démontables pour relier les première et deuxième parties.

Selon l'invention, les éléments de liaison démontables présentent chacun un axe approximativement parallèle à la direction biellette.

Cette solution permet de réduire l'encombrement en largeur de l'attache moteur arrière et donc d'améliorer les performances aérodynamiques du mât, tout en optimisant la reprise des efforts.

Selon une autre caractéristique, les éléments de liaison démontables sont inclinés par rapport à un plan de symétrie vertical des axes de liaison moteur des premier et deuxième biellettes.

Selon une autre caractéristique, la première partie comprend une première platine, qui présente une première face de contact approximativement perpendiculaire à la direction biellette et des premiers trous de passage présentant des axes approximativement parallèles à la direction biellette, ainsi qu'au moins une première patte qui présente au moins un orifice support. En complément, la deuxième partie comprend une deuxième platine, qui présente une deuxième face de contact approximativement perpendiculaire à la direction biellette et des deuxièmes trous de passage présentant des axes approximativement parallèles à la direction biellette, ainsi qu'au moins une deuxième patte qui présente au moins un orifice moteur.

Selon une configuration, l'attache moteur arrière comprend un support comportant au moins une embase configurée pour être reliée à la structure primaire ainsi qu'une âme, réalisée d'un seul tenant avec l'embase, positionnée dans un plan approximativement transversal. En complément, la première partie de la biellette comprend deux premières pattes parallèles, faiblement espacées, entre lesquelles l'unique âme (68) du support (62) est positionnée.

Selon une autre configuration, l'attache moteur arrière comprend un support comportant au moins une embase configurée pour être reliée à la structure primaire ainsi que deux âmes, réalisées d'un seul tenant avec l'embase, parallèles, faiblement espacées et positionnées dans des plans approximativement transversaux. En complément, la première partie de la biellette comprend une unique première patte positionnée entre les deux âmes du support. Selon un mode de réalisation, la deuxième partie de la biellette comprend deux deuxièmes pattes parallèles, faiblement espacées entre lesquelles une unique plaque d'ancrage latérale du moteur est positionnée en fonctionnement.

Selon un autre mode de réalisation, la deuxième partie de la biellette comprend une unique deuxième patte positionnée en fonctionnement entre deux plaques d'ancrage latérales du moteur.

Selon une autre caractéristique, chacune des première et deuxième parties comprend au moins une équerre de renfort reliant la première ou deuxième platine et la première ou deuxième patte.

L'invention a également pour objet un procédé de montage d'un moteur d'aéronef relié à une structure primaire d'un mât par une attache moteur arrière selon l'une des caractéristiques précédentes, caractérisé en ce que le procédé comprend une première étape de fixation des premières parties des biellettes sur la structure primaire et des deuxièmes parties des biellettes sur le moteur, une deuxième étape d'accostage lors de laquelle le moteur est soulevé jusqu'à ce que les première et deuxième parties de chaque biellette soient en contact l'une contre l'autre ainsi qu'une étape de mise en place des éléments de liaison démontables de manière à relier le moteur et la structure primaire. L'invention a également pour objet un aéronef comprenant au moins une attache moteur arrière selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'une motorisation,
- La figure 3 est une vue de face d'une attache moteur arrière qui illustre un mode de réalisation de l'art antérieur,
- La figure 4 est une vue de face d'un attache moteur arrière qui illustre un mode de réalisation de l'invention,
- La figure 5 est une vue en perspective de l'attache moteur arrière visible sur la figure 4 à l'état démonté,
- La figure 6 est une vue en perspective de l'attache moteur arrière visible sur la figure 4 en cours de montage, les première et deuxième parties de chaque biellette étant à l'état écarté et reliées l'une à une structure primaire et l'autre à un moteur,
- La figure 7 est une vue en perspective de l'attache moteur arrière visible sur la figure 4 en cours de montage, les première et deuxième parties de chaque biellette étant à l'état accosté, et
- La figure 8 est une vue en perspective de l'attache moteur arrière visible sur la figure 4, les première et deuxième parties de chaque biellette étant à l'état relié.

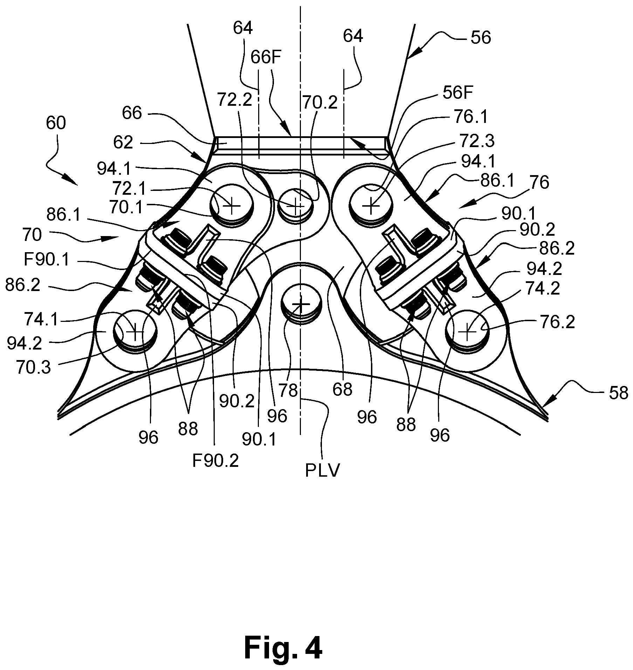

Sur les figures 4 à 8, on a représenté une structure primaire 56 d'un aéronef reliée à un moteur 58 par une attache moteur arrière 60.

Selon une configuration, la structure primaire 56 comprend une semelle 56F sensiblement plane pour solidariser l'attache moteur arrière 60.

L'attache moteur arrière 60 comprend un support 62 relié à la structure primaire 56 par des éléments de liaison 64 verticaux à la structure primaire 56. Ce support 62 comprend au moins une embase 66 qui présente une surface d'appui 66F plaquée contre la semelle 56F de la structure primaire 56 et des orifices traversant pour loger les éléments de liaison 64 ainsi qu'au moins une âme 68, réalisée d'un seul tenant avec l'embase 66, positionnée dans un plan approximativement transversal.

Selon un premier mode de réalisation, l'attache moteur arrière 60 comprend au moins une première biellette 70, reliée à l'âme 68 par des premier et deuxième axes de liaison support 72.1, 72.2 et au moteur 58 par un premier axe de liaison moteur latéral 74.1, ainsi qu'au moins une deuxième biellette 76 reliée à l'âme 68 par un troisième axe de liaison support 72.3 et au moteur 58 par un deuxième axe de liaison moteur latéral 74.2.

La première biellette 70 présente une première direction biellette parallèle à une première droite reliant le premier axe de liaison support 72.1 et le premier axe de liaison moteur latéral 74.1. La deuxième biellette 76 présente une deuxième direction biellette parallèle à une deuxième droite reliant le troisième axe de liaison support 72.3 et le deuxième axe de liaison moteur latéral 74.2. Ainsi, chacune des biellettes présente une direction biellette parallèle à une droite passant par un axe de liaison support reliant la biellette et le support et par un axe de liaison moteur reliant la biellette et le moteur.

Selon ce premier mode de réalisation, le support 62 est relié au moteur 58 par un axe de liaison moteur central 78. Cet axe, également appelé axe « fail-safe », est un axe de sécurité en attente qui n'est pas sollicité en condition normale.

Les premier, deuxième et troisième axes de liaison support 72.1, 72.2, 72.3, l'axe de liaison moteur central 78 ainsi que les premier et deuxième axes de liaison moteur latéraux 74.1, 74.2 sont parallèles entre eux et orientés selon une direction approximativement parallèle à la direction longitudinale. Pour simplifier les figures, tous ces axes de liaison 72.1, 72.2, 72.3, 78, 74.1, 74.2 sont représentés de manière symbolique sous forme de croix.

L'axe de liaison moteur central 78 est positionné au niveau du plan longitudinal vertical PLV. Ce plan PLV est vertical par rapport au sol lorsque l'aéronef est au sol et sépare le moteur en deux parties approximativement égales droite et gauche. Ce plan longitudinal vertical PLV est un plan de symétrie vertical des premier et deuxième axes de liaison moteur latéraux 74.1, 74.2. Les premier, deuxième et troisième axes de liaison support 72.1, 72.2, 72.3 sont alignés selon une direction transversale horizontale. Le deuxième axe de liaison support 72.2 est positionné entre les premier et deuxième axes de liaison support 72.1, 72.3.

L'âme 68 du support 62 comprend des premier, deuxième et troisième trous de passage 68.1, 68.2, 68.3 respectivement pour les premier, deuxième et troisième axes de liaison support 72.1, 72.2, 72.3 ainsi qu'un quatrième trou de passage 68.4 pour loger l'axe de liaison moteur central 78. La première biellette 70 comprend des premier et deuxième orifices 70.1, 70.2 pour loger les premier et deuxième axes de liaison support 72.1, 72.2 ainsi qu'un troisième orifice 70.3 pour loger l'axe de liaison moteur latéral 74.1. La deuxième biellette 76 comprend un premier orifice 76.1 pour loger le troisième axe de liaison support 72.3 ainsi qu'un deuxième orifice 76.2 pour loger le deuxième axe de liaison moteur latérale 74.2.

Le moteur 58 comprend au moins une plaque d'ancrage centrale 80, positionnée dans un plan transversal, qui présente un trou de passage 80.1 pour loger l'axe de liaison moteur central 78, au moins une première plaque d'ancrage latérale 82, positionnée dans un plan transversal, qui présente un trou de passage 82.1 pour loger le premier axe de liaison moteur latéral 74.1, ainsi qu'au moins une deuxième plaque d'ancrage latérale 84, positionnée dans un plan transversal, qui présente un trou de passage 84.1 pour loger le deuxième axe de liaison moteur latéral 74.2.

Selon une configuration, les axes de liaison support 72.1, 72.2, 72.3 ainsi que les premier et deuxième axes de liaison moteur latéraux 74.1, 74.2 intègrent chacun une liaison rotule pour permettre un débattement du moteur 58. Les axes de liaison support 72.1, 72.2, 72.3, les premier et deuxième axes de liaison moteur latéraux 74.1, 74.2 ainsi que l'axe de liaison moteur central 78 ne sont pas plus décrits car ils peuvent être identiques à ceux de l'art antérieur.

L'invention n'est pas limitée à ce mode de réalisation. Ainsi, selon un autre mode de réalisation, le support 62 pourrait ne pas être relié au moteur 58. Ainsi, la première biellette 70 pourrait comprendre un quatrième orifice pour loger l'axe de liaison moteur central 78. La deuxième biellette 76 pourrait ne pas être reliée au support 62 mais à la première biellette 70. Selon un autre mode de réalisation, le support 62 pourrait être intégré à la structure primaire 56.

Quel que soit le mode de réalisation, l'attache moteur arrière 60 comprend des première et deuxième biellettes 70, 76, chacune d'elles comprenant au moins un orifice support 70.1, 70.2, 76.1, pour loger un axe de liaison support 72.1, 72.2, 72.3, configuré pour relier la biellette 70, 76 directement ou indirectement à la structure primaire 56 ainsi qu'au moins un orifice moteur 70.3, 76.2, pour loger un axe de liaison moteur 74.1, 74.2, 78, configuré pour relier la biellette 70, 76 directement ou indirectement au moteur 58 ; Les axes de liaison support et moteur étant parallèles entre eux.

Chaque biellette 70, 76 comprend au moins deux parties 86.1, 86.2, une première partie 86.1 comportant le (ou les) orifice(s) support(s) 70.1, 70.2, 76.1, configurée pour être reliée directement ou indirectement à la structure primaire 56, et une deuxième partie 86.2, comportant le (ou les) orifice(s) moteur(s) 74.1, 74.2, configurée pour être reliée au moteur 58, ainsi que des éléments de liaison démontables 88 pour relier les première et deuxième parties 86.1, 86.2.

Selon une caractéristique de l'invention, les éléments de liaison démontables 88 sont orientés de manière à travailler en traction et non en cisaillement. Ainsi, ils présentent chacun un axe approximativement parallèle à la direction biellette. Cette configuration permet d'optimiser la reprise des efforts.

Selon un mode de réalisation, la première partie 86.1 comprend une première platine 90.1, qui présente une première face de contact F90.1 et des premiers trous de passage 92.1, ainsi qu'au moins une première patte 94.1 qui présente au moins un orifice support 70.1, 70.2, 76.1. En fonctionnement, la première face de contact F90.1 de la première platine 90.1 est approximativement perpendiculaire à la direction biellette et les premiers trous de passage 92.1 présentent des axes approximativement parallèles à la direction biellette.

Selon une première configuration, le support 62 comprend une unique âme 68 et la première partie 86.1 de la biellette 70, 76 comprend deux premières pattes 94.1 parallèles, faiblement espacées, entre lesquelles est positionnée l'unique âme 68 du support 62. Lorsque le support 62 comprend une unique âme 68, le moteur 58 comprend deux plaques d'ancrage centrales 80 parallèles, faiblement espacées et disposées de part et d'autre de l'unique âme 68.

Selon une deuxième configuration non représentée, la première partie 86.1 de la biellette 70, 76 comprend une unique première patte 94.1 et le support 62 comprend deux âmes 68 parallèles, faiblement espacées, entre lesquelles est positionnée l'unique première patte 94.1. Lorsque le support 62 comprend deux âmes 68, le moteur 58 comprend une unique plaque d'ancrage centrale 80 positionnée entre les deux âmes 68.

Selon un mode de réalisation, la deuxième partie 86.2 comprend une deuxième platine 90.2, qui présente une deuxième face de contact F90.2 et des deuxièmes trous de passage 92.2, ainsi qu'au moins une deuxième patte 94.2 qui présente au moins un orifice moteur 70.3, 76.2. En fonctionnement, la deuxième face de contact F90.2 est approximativement perpendiculaire à la direction biellette et les deuxièmes trous de passage 92.2 sont approximativement parallèles à la direction biellette.

Selon une première configuration, le moteur 58 comprend une unique première ou deuxième plaque d'ancrage latérale 82, 84 et la deuxième partie 86.2 de la biellette 70, 76 comprend deux deuxièmes pattes 94.2 parallèles, faiblement espacées, entre lesquelles est positionnée l'unique plaque d'ancrage latérale 82, 84 du moteur 58.

Selon une deuxième configuration non représentée, la deuxième partie 86.2 de la biellette 70, 76 comprend une unique deuxième patte 94.2 et le moteur 58 comprend deux première ou deuxième plaques d'ancrage latérales 82, 84 parallèles, faiblement espacées, entre lesquelles est positionnée l'unique deuxième patte 94.2.

Chacune des première et deuxième parties 86.1, 86.2 peut comprendre au moins une équerre de renfort 96 pour relier la première ou deuxième platine 90.1, 90.2 et la première ou deuxième patte 94.1, 94.2.

Chaque platine 90.1, 90.2 se présente sous la forme d'une plaque qui présente un pourtour approximativement carré ou rectangulaire avec des angles arrondis. Selon une configuration, les première et deuxième platines 90.1 et 90.2 sont symétriques par rapport à un plan de contact (perpendiculaire à la direction biellette) correspondant aux première et deuxième faces de contact F90.1, F90.2 lorsqu'elles sont plaquées l'une contre l'autre.

Selon une configuration, chaque platine 90.1, 90.2 comprend quatre trous de passage 92.1, 92.2 disposés de part et d'autre de la ou des première ou deuxième patte(s) 94.1, 94.2. Les premiers trous de passage 92.1 de la première platine 90.1 sont agencés de manière à être alignés avec les deuxièmes trous de passage 92.2 de la deuxième platine 90.2 lorsque les première et deuxième platines 90.1, 90.2 sont plaquées l'une contre l'autre. Au moins l'une des première et deuxième platines 90.1, 90.2 comprend au moins un centreur pour favoriser l'alignement des premiers trous de passage 94.1 de la première platine 90.1 avec les deuxièmes trous de passage 94.2 de la deuxième platine 90.2 lors d'une étape d'accostage des première et deuxième platines 90.1, 90.2.

Selon un mode de réalisation, les éléments de liaison démontables 88 sont des boulons équipés de systèmes de freinage visant à empêcher les boulons de se desserrer.

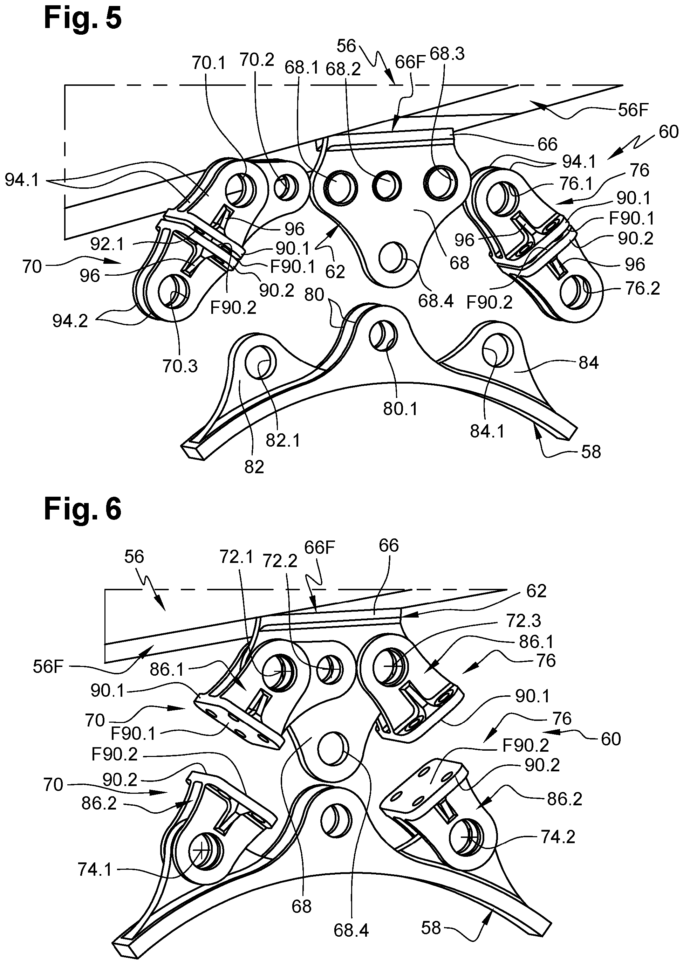

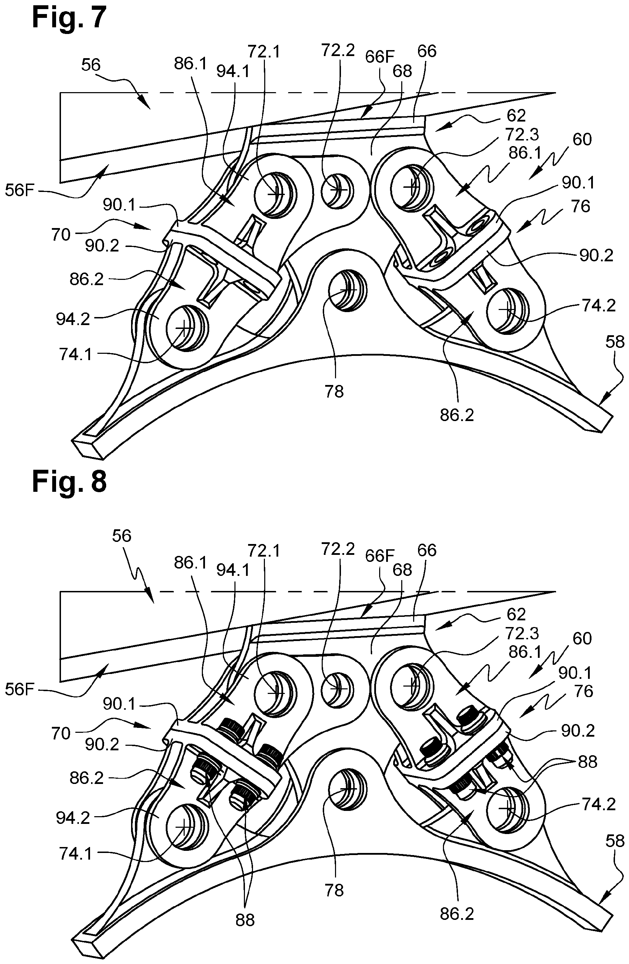

Le procédé de montage du moteur 58 comprend une première étape de fixation du support 62 et des premières parties 86.1 des biellettes 70, 76 sur la structure primaire 56 ainsi que des deuxièmes parties 86.2 des biellettes 70, 76 sur le moteur 58, comme illustré sur la figure 6 ; une deuxième étape d'accostage lors de laquelle le moteur 58 est soulevé jusqu'à ce que les première et deuxième parties 86.1, 86.2 de chaque biellette 70, 76 soient en contact l'une contre l'autre et les premiers et deuxième trous de passage 94.1, 94.2 alignés, comme illustré sur la figure 7 ; ainsi qu'une étape de mise en place des éléments de liaison démontables 88 de manière à relier le moteur 58 et la structure primaire 56.

Lors du démontage du moteur 58, seuls les éléments de liaison démontables 88 et l'axe de liaison moteur 78 sont retirés pour désolidariser le moteur 58 de la structure primaire 56.

Selon l'invention, les orifices moteurs 70.3, 76.2 étant plus écartés du plan longitudinal vertical PLV que les orifices supports 70.1, 70.2, 76.1, les première et deuxième platines 90.1, 90.2 sont inclinées par rapport à l'horizontale et les éléments de liaison démontables 88 ne sont pas verticaux mais inclinés par rapport au plan longitudinal vertical PLV. A titre indicatif, les éléments de liaison démontables 88 forment un angle compris entre 30 et 60° avec le plan longitudinal vertical PLV. Cette inclinaison favorise l'accessibilité aux éléments de liaison démontables 88. Cette meilleure accessibilité permet de réduire l'encombrement en largeur de l'attache moteur arrière 60 et donc d'améliorer les performances aérodynamiques du mât.

Enfin, ces éléments de liaison démontables 88 sous forme de boulons sont moins propices aux phénomènes de grippage que les axes de liaison moteur.

## Revendications

1. Attache moteur arrière d'aéronef reliant une structure primaire (56) d'un mât et un moteur (58) d'aéronef,
- ladite attache moteur arrière comprenant :
∘ des première et deuxième biellettes (70, 76), chacune des première et deuxième biellettes (70, 76) présentant au moins un orifice support (70.1, 70.2, 76.1) et au moins un orifice moteur (70.3, 76.2),
∘ pour chaque orifice support (70.1, 70.2, 76.1), un axe de liaison support (72.1, 72.2, 72.3) qui est logé dans l'orifice support (70.1, 70.2, 76.1) et configuré pour relier la biellette (70, 76) directement ou indirectement à la structure primaire (56),
∘ pour chaque orifice moteur (70.3, 76.2), un axe de liaison moteur (74.1, 74.2, 78) qui est logé dans l'orifice moteur (70.3, 76.2) et configuré pour relier la biellette (70, 76) directement ou indirectement au moteur (58),
- les axes de liaison support et moteur (72.1, 72.2, 72.3, 74.1, 74.2, 78) étant parallèles entre eux,
- chacune des première et deuxième biellettes (70, 76) présentant une direction biellette parallèle à une droite passant par l'axe de liaison support (72.2, 72.2, 72.3) et par l'axe de liaison moteur (74.1, 74.2, 78),
- chacune des première et deuxième biellettes (70, 76) comprenant au moins deux parties (86.1, 86.2), une première partie (86.1) comportant le (ou les) orifice(s) support(s) (70.1, 70.2, 76.1), une deuxième partie (86.2) comportant le (ou les) orifice(s) moteur(s) (74.1, 74.2) ainsi que des éléments de liaison démontables (88) pour relier les première et deuxième parties (86.1, 86.2),
**caractérisé en ce que** les éléments de liaison démontables (88) présentent chacun un axe approximativement parallèle à la direction biellette.

2. Attache moteur arrière d'aéronef selon la revendication 1, **caractérisée en ce que** les éléments de liaison démontables (88) sont inclinés par rapport à un plan de symétrie vertical des axes de liaison moteur (74.1, 74.2) des premier et deuxième biellettes (40, 76).

3. Attache moteur arrière d'aéronef selon l'une des revendications précédentes, **caractérisée en ce que** la première partie (86.1) comprend une première platine (90.1), qui présente une première face de contact (F90.1) approximativement perpendiculaire à la direction biellette et des premiers trous de passage (92.1) présentant des axes approximativement parallèles à la direction biellette, ainsi qu'au moins une première patte (94.1), qui présente au moins un orifice support (70.1, 70.2, 76.1), et **en ce que** la deuxième partie (86.2) comprend une deuxième platine (90.2), qui présente une deuxième face de contact (F90.2) approximativement perpendiculaire à la direction biellette et des deuxièmes trous de passage (92.2) présentant des axes approximativement parallèles à la direction biellette, ainsi qu'au moins une deuxième patte (94.2) qui présente au moins un orifice moteur (70.3, 76.2).

4. Attache moteur arrière d'aéronef selon la revendication précédente, **caractérisée en ce que** l'attache moteur arrière comprend un support (62) comportant au moins une embase (66), configurée pour être reliée à la structure primaire (56), ainsi qu'une âme (68), réalisée d'un seul tenant avec l'embase (66), positionnée dans un plan approximativement transversal, et **en ce que** la première partie (86.1) de la biellette (70, 76) comprend deux premières pattes (94.1) parallèles, faiblement espacées, entre lesquelles l'unique âme (68) du support (62) est positionnée.

5. Attache moteur arrière d'aéronef selon la revendication 3, **caractérisée en ce que** l'attache moteur arrière comprend un support (62) comportant au moins une embase (66) configurée pour être reliée à la structure primaire (56), ainsi que deux âmes (68), réalisées d'un seul tenant avec l'embase (66), parallèles, faiblement espacées et positionnées dans des plans approximativement transversaux, et **en ce que** la première partie (86.1) de la biellette (70, 76) comprend une unique première patte (94.1) positionnée entre les deux âmes (68) du support (62).

6. Attache moteur arrière d'aéronef selon l'une des revendications 3 à 5, **caractérisée en ce que** la deuxième partie (86.2) de la biellette (70, 76) comprend deux deuxièmes pattes (94.2) parallèles, faiblement espacées, entre lesquelles une unique plaque d'ancrage latérale (82, 84) du moteur (58) est positionnée en fonctionnement.

7. Attache moteur arrière d'aéronef selon l'une des revendications 3 à 5, **caractérisée en ce que** la deuxième partie (86.2) de la biellette (70, 76) comprend une unique deuxième patte (94.2) positionnée en fonctionnement entre deux plaques d'ancrage latérales (82, 84) du moteur (58).

8. Attache moteur arrière d'aéronef selon l'une des revendications 3 à 7, **caractérisée en ce que** chacune des première et deuxième parties (86.1, 86.2) comprend au moins une équerre de renfort (96) reliant la première ou deuxième platine (90.1, 90.2) et la première ou deuxième patte (94.1, 94.2).

9. Procédé de montage d'un moteur d'aéronef relié à une structure primaire d'un mât par une attache moteur arrière selon l'une des revendications 1 à 8, **caractérisé en ce que** le procédé comprend une première étape de fixation des premières parties (86.1) des biellettes (70, 76) sur la structure primaire (56) et des deuxièmes parties (86.2) des biellettes (70, 76) sur le moteur (58), une deuxième étape d'accostage lors de laquelle le moteur (58) est soulevé jusqu'à ce que les première et deuxième parties (86.1, 86.2) de chaque biellette (70, 76) soient en contact l'une contre l'autre ainsi qu'une étape de mise en place des éléments de liaison démontables (88) de manière à relier le moteur (58) et la structure primaire (56).

10. Aéronef comprenant au moins une attache moteur arrière selon l'une des revendications 1 à 8.
